# EUROPEAN PATENT APPLICATION

(11) **EP 1 420 324 A1**
(43) Date of publication of application: **19.05.2004**
(21) Application number: 03026042.6
(22) Date of filing: 12.11.2003
(51) Int. Cl.: G06F 1/00

(54) **System, server, terminal, program and method based on electronic tickets for the management of digital utilization rights**

(30) Priority: 13.11.2002 JP 2002329593
(71) Applicant: NEC CORPORATION, Tokyo (JP)
(72) Inventor: Iga, Norihisa, Tokyo (JP)
(74) Representative: Betten & Resch

(57) **Abstract**

A ticket showing contents utilization right is issued separately form contents to permit exchange of the ticket between terminals. In order that an approval by the contents copyright under be obtained for the ticket exchange between terminals, a check is made by making a notification to an assignment monitoring server on the network. If necessary, the assignment monitoring server may be allowed to levy fees. Thus, direct exchanging of contents utilization right between terminals and automatic copyright owner's approval are realized.

## Description

### BACKGROUND OF THE INVENTION

This application claims benefit of Japanese Patent Application No. 2002-329593 filed on November 13, 2002, the contents of which are incorporated by the reference.

The present invention relates systems for and methods of utilizing contents of music data, image data, software, etc. present in a user's (or utilizer's) terminal or on a network, as well as to servers and programs for the same systems and methods. More specifically, the present invention relates to systems and methods, which permit assignment of contents utilization rights between different users and also automatically obtaining, at the time of assignment, the copyright owner's approval concerning the contents, as well as to servers and programs for the same systems and methods. Furthermore, the present invention concerns techniques which permit, in the case of committing assignment of a contents utilization right between user's terminals or portable data terminals for utilizing the contents, provision of assignment conditions at the time of the assignment and fee collection, if necessary.

Portable data terminals typically those of portable telephone, can down-load such contents as those of music data and image data from a network for executing these contents. However, for the copyright protection sake it is prohibited to take out the contents once down-loaded to the outside of the pertinent portable data terminal. Also, it is prohibited to assign the contents.

By way of example, Literature 1 (Japanese patent laid-open 2001-78266) proposes a contents distribution system in which music data distributed by a distribution server is stored in a recording medium in a portable data terminal and the stored data can be assigned to a different portable data terminal by changing the ciphering for the distribution server, thus realizing assignment of the music data in each recording medium and protection of the copyright of the distribution source. In the contents distribution system described in the Literature 1, however, the music utilization right and the music contents are not separable from each other, and therefore the assignment is committed in units of memory cards as recording media. Therefore, in the case of a memory card containing a plurality of contents, all the contents are assigned at a time. In other words, it is impossible to permit sophisticated contents assignments. Also, contents assignment is committed for each memory card capable of being loaded and unloaded and is thus thought to be relatively inexpensive. In a further aspect, at the time of the contents assignment, it may be necessary to obtain a copyright owner's approval in dependence on the kind of contents, but the literature has no direct teaching of any arrangement for obtaining the approval.

Literature 2 (Japanese patent laid-open 2001-34666), Literature 3 (Japanese patent laid-open 2002-229661) and Literature 4 (Japanese patent laid-open 2002-245191) describe techniques of building a system for obtaining copyright owner's approvals on a network. In the techniques disclosed in the Literatures 2 to 4, however, an arrangement concerning contents is made via a server before committing assignments concerning the contents via the server. This means that no assignment of contents utilization right is committed between terminals independently of the contents. For example, it is impossible to allow direct assignment of contents utilization right between terminals such as friends independently of the contents.

### SUMMARY OF THE INVENTION

The present invention was made in view of the above background affairs, and it has an object of providing a system for and a method of contents utilization, which permit direct assignment of a contents utilization right between terminals separately from the contents and also automatically obtaining, at the time of the assignment, an approval by a copyright owner or a contents provider, as well as servers or programs for the same system and method.

Another object of the present invention is to provide a system for and a method of contents utilization, which provides, at the time of contents utilization right assignment, assignment conditions and, if necessary, can collect fees, thus providing improved convenience of contents utilization, as well as servers and programs for the same system and method.

According to the present invention, data of a right for utilizing such contents as music data or image data is issued separately from the contents themselves to a terminal which utilizes the contents, and data representing the right of utilization is exchanged between terminals. In function, the data representing the contents utilization resembles a ticket, which is necessary for listening to music in a concert or watching a movie, in the present specification the contents utilization right data is referred to as ticket. As an arrangement permitting an approval of a copyright owner or the like to be automatically obtained in a ticket assignment between terminals, an assignment monitoring server for managing contents utilization right assignments is provided on a network, and a check as to whether contents assignment conditions have been met is made with an assignment notification made from the assignment source and assignment destination terminals to the assignment monitoring server. When it is found at this time that the contents utilization assignment conditions have been satisfied, direct ticket assignment is committed between terminals, and the assignment destination terminal obtains and executes the assigned contents according to the received ticket.

The ticket contains ticket ID, terminal ID identifying the terminal holding the ticket, address of the ticket server issuing the ticket, contents utilization condition data such as utilization time, utilization time zone and number of times of utilization, ID identifying the contents, address of the contents server with the contents provided thereto, key for deciphering ciphered contents data, address of assignment monitoring server for managing the assignment conditions, data indicative of whether ticket assignment to different terminals is possible, data as to whether the contents of the ticket have been utilized, etc. The ticket itself can be exchanged between terminals, and at the time of the ticket exchange, the copyright owner's approval is automatically obtainable by checking whether the assignment meets conditions of approval of the copyright owner or the like with accessing the assignment monitoring server for the check.

According to the present invention, contents are stored, and the ticket server issues a ticket separately from the contents according to data from the content server, which distributes the contents, the issued ticket being delivered to a terminal (or user) desiring the contents. The terminal holding the ticket can obtain and utilize the contents according to the ticket. When the terminal holding the ticket desires to assign the contents utilization right shown by the ticket to a different terminal, it accesses an assignment monitoring server with the addresses thereof described in the ticket, and informs the desire of the assignment commitment to the assignment monitoring server. The assignment monitoring server checks whether the assignment meets the contents assignment conditions shown in the ticket. When fee payment conditions are given as the assignment conditions, the assignment destination server does fee payment to the assignment monitoring server. The assignment source terminal directly assigns the ticket via the communication means to the assignment destination terminal. When the assignment has been committed, the terminal holding the ticket is changed, and the assignment monitoring server informs the assignment data to the ticket server. When assignment procedure has been completed, the contents utilization right is shifted to the assignment destination terminal, and the assignment destination terminal obtains and executes the contents by accessing the content server or the like according to the ticket.

The ticket contains utilization conditions, and in the case when a ticket for obtaining the contents obtains the contents utilization right for the purpose of presenting the right to a different terminal instead of executing the contents by itself, the assignment destination is not allowed to collect any fee in the ticket assignment commitment. Alternatively, it is possible to arrange such that a ticket containing data of a present number of times of utilization is issued, and the number of times of contents utilization is counted from the number of times of contents execution, and the remaining number of times of utilization can be assigned in the assignment of the ticket showing the remaining number of times of utilization.

Furthermore, since the assignment monitoring server can check the assignment conditions according to the ticket, it is also possible to assign contents at the time of ticket assignment between terminals.

Still further, the assignment monitoring server can collect fees in collection from the assignment destination at the time of ticket assignment commitment and later effect payment to the contents copyright owner or the contents provider, while also effecting payment to the assignment source terminal user. With fee paying to one place by the assignment destination terminal user, it is possible to reduce the communication data quantity and simplify the fee payment procedure in the assignment.

Moreover, the ticket assignment approval conditions which are registered in the assignment monitoring server can later be updated, thus permitting flexibly coping with the case of updating of such assignment approval conditions as contents copyright fees in response to a request by the contents copyright owner or the contents provider.

Specifically, according to an aspect of the present invention, there is provided a contents utilization system comprising a contents server with contents stored therein, a terminal for obtaining contents stored in the contents server via the network and executing the obtained contents, a ticket server for issuing ticket data showing a utilization right executing the contents in the terminal, the terminal including a means for assigning the ticket data to a different terminal, the contents utilization system further comprising an assignment monitoring server for receiving a notification from a terminal for assigning the ticket data and checking whether the assignment of the ticket data between the terminals meets the contents utilization conditions.

Here, in the contents utilization system, the ticket data contains contents identification data, terminal identification data, contents utilization conditions, ticket server address, contents server address, a key for de-ciphering contents data, assignment monitoring server address, data indicative of whether assignment of ticket data is possible, and data indicative of whether the contents represented by the contents data have been utilized.

Also, when conditions for levying fee for ticket assignment are provided as ticket assignment approval conditions, the assignment monitoring server approves the assignment with a condition that fee is levied from the assignment destination terminal user according to the assignment approval conditions. When it is necessary to pay fees to the assignment source terminal user as well, it is possible to arrange that the assignment monitoring server does payment of fee among the fee collectively levied from the assignment destination terminal user to the assignment source terminal user.

The assignment monitoring server can update the ticket assignment approval conditions. The assignment monitoring server includes means for making payment to the assignment source terminal user when it has levied fees from the assignment destination terminal user.

When data of whether the contents of the ticket data have been utilized is not utilized in the assignment destination source, the assignment monitoring server approves the assignment of the ticket data without levying any fee.

The contents server, the ticket server and the assignment monitoring server are together constituted by a single server.

According to another aspect of the present invention, there is provided a contents utilization method comprising the steps that: data of a contents utilization right, which permits obtaining and executing contents, is issued as ticket data to a terminal desiring contents utilization separately from contents distributed to the terminal; when assigning the contents utilization right to a different terminal, the ticket data is assigned to the other terminal, while notifying the ticket assignment to an assignment monitoring server for managing the assignment of the contents utilization right; the assignment monitoring server notifies contents utilization approval conditions shown by the ticket data to the assignment destination terminal; when the ticket data assignment destination terminal executes a process meeting the notified assignment approval conditions, it notifies the completion of the ticket data assignment process; and the assignment destination terminal obtains and executes the contents according to the obtained ticket data.

The ticket data contains contents identification data, terminal identification data, contents utilization condition data, ticket issuance server address, contents storage server address, a key for de-ciphering contents data, assignment monitoring server address and data as to whether the ticket contents have been utilized.

When conditions for levying fee for ticket assignment are provided as ticket assignment approval conditions, the ticket assignment destination terminal user executes a fee payment process according to the assignment approval conditions and then notifies the completion of the ticket assignment process.

After the ticket assignment destination terminal user has made fee payment to the assignment monitoring server, the assignment monitoring server makes fee payment of an amount corresponding to the fee charged to the assignment destination terminal user.

The data as to whether the contents in the ticket have been utilized shows that the contents are not utilized in the assignment source terminal, the assignment destination terminal user obtains the ticket without payment of any fee.

According to other aspect of the present invention, there is provided a ticket server for issuing contents ID, contents ID, content utilization terminal ID, contents utilization condition, and ticket data concerning whether the sole ticket data have been assigned between the terminals, as the contents utilization right data to a terminal desiring the contents utilization or contents utilization right assignment separately from a contents server with the contents stored therein. Also, there is provided an assignment monitoring server for registering contents utilization approval conditions of a contents copyright owner or a contents provider, receiving a notification from an assignment source or an assignment destination terminal desiring assignment of a content utilization right, checking whether the contents utilization right assignment meets the approval conditions for the contents copyright owner or the contents provider and notifying the check result to the assignment source and destination terminals.

The registered contents utilization approval conditions are capable of being updated by the contents copyright owner or the contents provider.

In the case of requiring fee payment to the assignment source terminal user in the case when fee about the ticket assignment is levied from the assignment destination terminal user, the assignment destination terminal user pays fee.

According to further aspect of the present invention, there is provided a terminal comprising means for obtaining ticket data of contents utilization right from a ticket server, which issues the ticket data separately from the contents, ticket communication means for permitting exchange of the ticket data with a different terminal, means for confirming the contents utilization right by making a notification of the right to an assignment monitoring server for managing the ticket assignment, and a contents execution means for obtaining and executing the contents of the ticket data.

According to still further aspect of the present invention, there is provided a program to be installed in a universal data processing system having: a function of a contents server with contents stored therein; a function of a ticket server for issuing ticket data of a utilization right for executing the contents to a terminal; and a function of receiving, at the time of assignment of the ticket data between terminals, a notification from a terminal, which assigns the ticket data, and checking whether the assignment of the ticket data between the terminals meets the contents utilization conditions provided in the ticket data.

In the program, the ticket data contains contents identification data, terminal identification data, contents utilization conditions, ticket server address, contents server address, a key for deciphering contents data, assignment monitoring server address, data indicative of whether assignment of ticket data is possible, and data indicative of whether the contents represented by the contents data have been utilized.

In the program, when conditions for levying fee for ticket assignment are provided as ticket assignment approval conditions, the assignment monitoring server approves the assignment with a condition that fee is levied from the assignment destination terminal user according to the assignment approval conditions.

In the program, the assignment monitoring server can update the ticket assignment approval conditions.

The assignment monitoring server includes means for making payment to the assignment source terminal user when it has levied fees from the assignment destination terminal user.

When data of whether the contents of the ticket data have been utilized is not utilized in the assignment destination source, the assignment monitoring server approves the assignment of the ticket data without levying any fee.

According to still further aspect of the present invention, there is provided a program to be installed in a terminal having a communication means for executing: a function of obtaining ticket data of the contents utilization right from a ticket server, which issues the ticket data separately from the contents, a function of permitting exchange of the ticket data between terminals, a function of confirming a contents utilization right of the ticket data as a subject of assignment by making a notification to an assignment monitoring server for managing the ticket assignment.

These programs can be provided via a communication line and also as recording media with their records therein.

Other objects and features will be clarified from the following description with reference to attached drawings.

### BRIEF DESCRIPTION OF THE DRAWINGS

Fig. 1 is a view showing the arrangement of a first embodiment of the system according to the present invention;
Fig. 2 is a block diagram showing the arrangement of a portable data terminal in the embodiment;
Fig. 3 is a view showing the arrangement of an assignment monitoring server in the embodiment;
Fig. 4 is a view showing an operation sequence of the embodiment;
Fig. 5 is a view showing the contents of ticket;
Fig. 6 is a view showing the notification contents of assignment source;
Fig. 7 is a view showing the assignment destination receipt notification contents;
Fig. 8 is a view showing the assignment approval condition;
Fig. 9 is a view showing the assignment destination assignment condition;
Fig. 10 is a view showing the assignment destination assignment processing completion notification; and
Fig. 11 is a view showing the ticket assignment notification.

### PREFERRED EMBODIMENTS OF THE INVENTION

Preferred embodiments of the present invention will now be described with reference to the drawings.

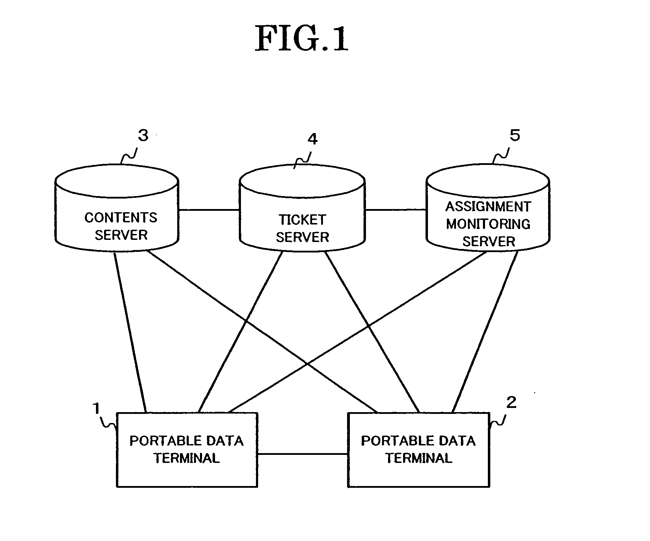

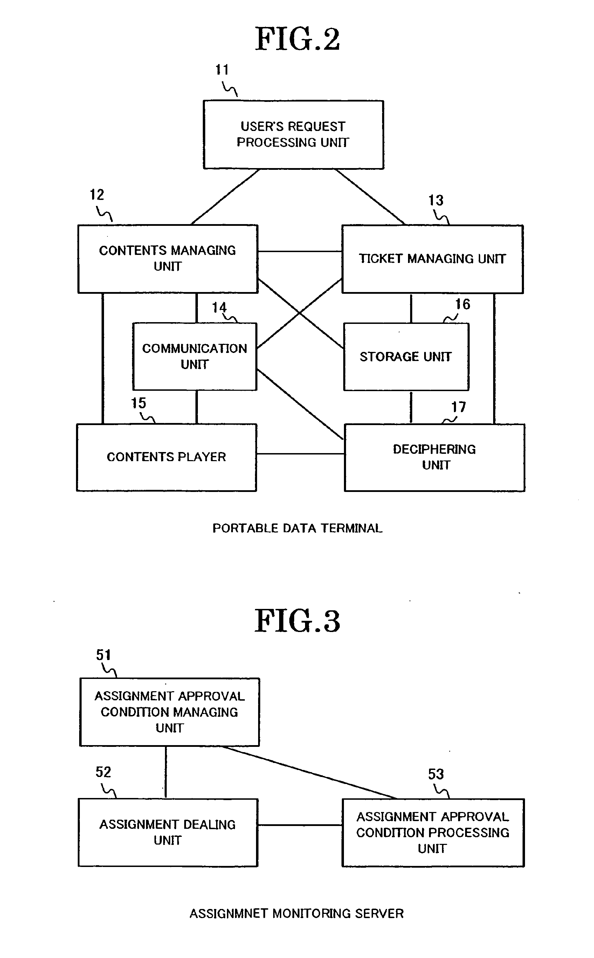

Fig. 1 is a view showing the arrangement of a first embodiment of the system according to the present invention. Fig. 2 is a block diagram showing the arrangement of a portable data terminal. Fig. 3 is a view showing the arrangement of an assignment monitoring server.

Referring to Fig. 1, the system as the first embodiment of the present invention comprises portable data terminals 1 and 2, a contents server 3, a ticket server 4 and an assignment monitoring server 5, these components being developed in a network.

The contents server 3 and the ticket server 4 may be constituted together by a single server. Also, the contents server 3, the ticket server 4 and the assignment monitoring server 5 may be constituted by a single server.

As shown in Fig. 2, the portable data terminals 1 and 2 each includes at least a user's request processing unit 11, a contents managing unit 12, a ticket managing unit 13, a communication unit 14, a contents player 15, a storage unit 16 and deciphering unit 17. Such general component elements of the portable data terminal as input unit such as a keyboard and such output units as a display and a loudspeaker are omitted here.

The user's request processing unit 11 provides operation menu displays to users, and accepts such requests as obtaining ticket, obtaining contents and executing contents from key input or the like. The contents processing unit 12 confirms the contents and operates the contents player 15. The ticket managing unit 13 serves to purchase new tickets and also executes processes concerning ticket assignment from a different data terminal. The communication unit 14 communicates with a different portable terminal or with the contents server 3, the ticket server 4 and the assignment monitoring server 5 at the time of obtaining/assigning of contents of a ticket. The communication unit 14 can do wireless or wired communication. The contents player 15 executes contents data. The storage unit 16 stores contents data and tickets. The storage unit 16 may be a storage device provided in the portable data terminal, or it may be a memory card capable of being loaded in and unloaded from the portable data terminal. The deciphering unit 17 ciphers data or deciphers ciphered data.

The contents server 3 stores and manages ciphered contents data, and provides contents data in response to a request from a portable data terminal.

The ticket server 4 manages the issuing of contents data as tickets managed by the contents server 3, and provides a ticket in response to a request from a portable data terminal. The ticket contains the contents provider and utilization condition data, which will be described later.

As shown in Fig. 3, the assignment monitoring server 5 includes at least an assignment approval condition managing unit 51, an assignment dealing unit 52 and an assignment approval condition processing unit 53.

The assignment approval condition managing unit 51 manages assignment conditions corresponding to the contents, and provides assignment conditions to an assignment destination portable data terminal. When and only when the assignment conditions are agreed with, the assignment can be committed. The assignment dealing unit 52 monitors normal ending of assignments. The assignment approval condition processing unit 53 executes fee processes provided at the time of the assignment commitment.

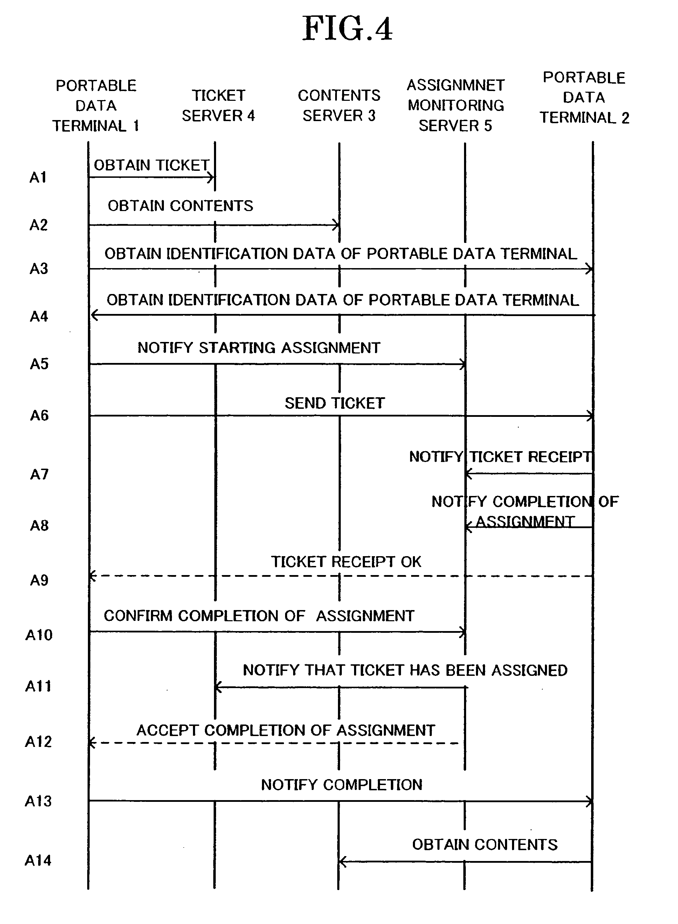

The operation of this embodiment will now be described with reference to Figs. 4 to 11.

The operation of this embodiment is roughly constituted by the following two processes.
(1) Pre-processing
(2) Contents utilization

### (I) Pre-processing

In the pre-processing, preparations for the contents distribution are made. First, the contents copyright owner or the contents provider stores contents data in the contents server 3. At this time, the owner or the provider ciphers the contents data and delivers a de-ciphering key thereof to the ticket server 4. The owner or the provider also delivers contents data ID and data as to the ticket assignment between terminals is allowed at the same time to the ticket server 4.

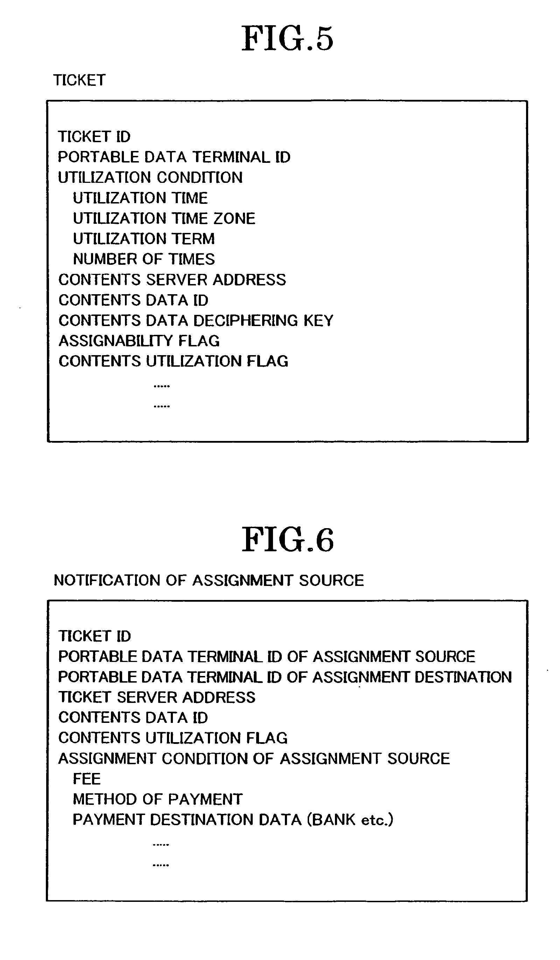

These data delivered to the ticket server 4 are contained as part of ticket data as shown in Fig. 5 in the ticket at the time of a request from a portable data terminal for obtaining the ticket.

The contents copyright owner or the contents provider further have ticket assignment approval conditions informed together with the contents ID to the assignment monitoring server 5 for registration in the same. The registered ticket assignment approval conditions are capable of being updated so as to be able to flexibly coping with updating of the copyright fee or updating of a condition for permitting charge-free contents utilization.

### (II) Contents utilization

The actual contents assignment and the summary of assignment operation will now be described.

Fig. 4 is a view showing a sequence concerning the operations of obtaining, executing and assigning contents to be described hereinunder.

Step A-1: The portable data terminal 1 purchases a ticket of contents of music, video, etc. desired to be utilized from the ticket server 4. At this time, the user selects a ticket to be obtained and presets contents utilization conditions such as utilization time, utilization term and number of times of utilization by utilizing the user's request processing unit 11. The user then sends out the preset values via the ticket managing unit 13 and the communication unit 14 to the ticket server 4 to let the ticket be generated and sent back. As a communication channel to let the ticket to be sent back, a secured communication channel is utilized, which has been ciphered by the communication unit 14 with respect to the ticket server 4 by utilizing the de-ciphering unit 17. When the communication unit 14 in the portable data terminal 1 receives the ticket, it causes the ticket managing unit 13 to store the ticket in the storage unit 16. The contents of the ticket issued by the ticket server include at least the contents as shown in Fig. 5.

Specifically, described as ticket data are ticket ID, portable data terminal ID as identifier of portable data terminal having a right to hold the pertinent ticket, a ticket server address as address of a server issuing the ticket, utilization conditions such as utilization time, utilization time zone, test use time and number of times of utilization, contents server address as address of server managing contents data, with which the ticket can be utilized, contents data ID as identifier which can absolutely discriminate content data, with which the ticket can be utilized, contents data deciphering key for deciphering contents data ciphered in the portable data terminal, assignment monitoring server address, assignability flag indicative of whether the ticket is assignable to any other portable data terminal, contents utilization flag indicative of whether contents corresponding to the ticket have been utilized.

Step A-2: The portable data terminal 1 tries to execute contents corresponding to the obtained ticket. If no contents data is present, the portable data terminal 1 obtains the contents data from the contents server 3 and executes the same. First, the user displays a list of tickets held in the portable data terminal 1 by operating the user request processing unit 11.

Specifically, the user request processing unit 11 calls the ticket managing unit 13, and the ticket managing unit 13 calls the storage unit 16 to obtain ticket data. Subsequently, the user selects a ticket corresponding to the contents desired to be utilized this time, and makes an execution request.

The contents are executed when it is confirmed in the ticket managing unit 13 that the portable data terminal ID of the ticket shown in Fig. 5 and the portable data terminal ID of the portable data terminal 1 are identical. In other words, in this process it is confirmed that the ticket has a right of its use in the portable data terminal 1. In the case of failure of the ID identity, the contents cannot be executed.

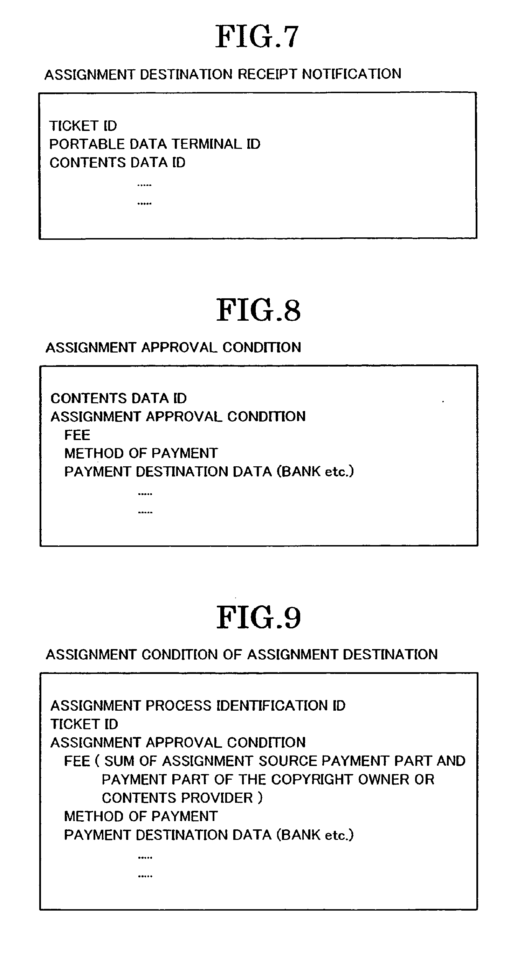

When the contents are executed even once, the pertinent ticket contents utilization flag present in the storage unit 5 is re-written to a value indicative of that the contents have been utilized. This leads to the provision, when the portable data terminal 1 assigns the ticket to any other terminal, of assignment approval conditions as shown in Fig. 8 other than presentation purpose conditions.

While the term "presentation purpose" is used here, the presentation purpose means a case that a portable data terminal once purchased a contents utilization ticket assigns the ticket to a different portable data terminal without utilizing the corresponding contents at all. This case is thought to be met by an act of purchasing the ticket for the purpose of presenting the purchased ticket to a different portable terminal (or other user). In this case, the assignment approval conditions in the assignment destination portable data terminal are thought to be loosened.

The term "other than presentation purpose" means a case that a portable data terminal purchases a contents utilization ticket and utilizes the corresponding contents before assigning the ticket to a different portable data terminal (or other user). This case is met by an act of purchasing a ticket not for the purpose of presenting the ticket to a different portable data terminal (or other user) but for the purpose of utilizing the ticket only in the portable data terminal (or user) having obtained the ticket, executes the contents, and when the ticket is no longer necessary, assigns the ticket to a different portable data terminal (or other user).

It is now assumed that the user of the portable data terminal 1 no longer need the contents and desires to assign the ticket to the portable data terminal 2.

Steps A-3 and A-4: The user's request processing unit 11 in the portable data terminal 2 selects assignment acceptance, and renders the ticket managing unit 13 of the portable data terminal 2 to an assignment acceptable state. The user's request processing unit 11 of the portable data terminal 1 selects the ticket to be assigned, and notifies the selection to the ticket managing unit 13 in the portable data terminal 1.

The ticket managing units 13 in the portable data terminals 1 and 2, respectively, exchange their terminal identification data. The terminal identification data are identifiers which can be absolutely identified by the mutual portable data terminals. As an example, when the portable data terminals are portable telephone set, it is possible to use telephone numbers of these portable telephone sets.

Step A-5: The portable data terminal 1 notifies to the assignment monitoring server 5 that it will assign a ticket or tickets. The notification at least has contents as shown in Fig. 6. Specifically, as the assignment source notification, ticket ID, assignment source portable data terminal ID as identifier for absolutely identifying the assignment source portable data terminal, assignment destination portable data terminal ID as identifier for absolutely identifying the assignment destination portable data terminal, ticket server address as address of sever issuing a ticket to be assigned, contents data ID and identifier for absolutely identifying contents data permitting the ticket utilization, a contents utilization flag as a flag as to whether the contents corresponding to the pertinent ticket have been utilized, assignment conditions such as fee, method of payment (for instance bank window), etc., are notified.

In the assignment monitoring server 5, the assignment dealing unit 52 holds the notification until the end of the assignment process.

Step A-6: In order that the portable data terminal 1 be prohibited by the ticket managing unit 13 to use the assignment subject ticket stored in the storage unit 16, the portable data terminal 1 re-writes the portable data terminal ID as content described in the ticket to a value indicative of the ineffectiveness. Then, the portable data terminal 1 duplicates the ticket, and has the duplicated ticket be ciphered in the ciphering unit 17 and sent out via the communication unit 14 to the portable data terminal 2.

The portable data terminal 2 receives the ticket ciphered in the communication unit 14 and has the received ticket be deciphered in the ciphering unit 17. The ticket managing unit 13 stores the deciphered ticket in the storage unit 16.

Step A-7: The portable data terminal 2 notifies to the assignment monitoring server 5 that it has received the assignment subject ticket. The contents of the notification are contained at least in the contents shown in Fig. 7. Specifically, as the assignment destination ticket reception notification, a message, in which ticket ID for identifying the received assignment subject ticket, portable data terminal ID as identifier for absolutely identifying the assignment destination portable data terminal and contents data ID as identifier for absolutely identifying contents data permitting the ticket utilization are described, is notified to the assignment monitoring server.

The notification is received by the assignment dealing unit 52 in the assignment monitoring server 5. The assignment dealing unit 52 then retrieves for notification data shown in Fig. 5, which has been received from the portable data terminal 1. If such notification data is found, the assignment dealing unit 52 decides that the assignment source is willing to commit the assignment, and requests to the assignment approval condition managing part 51 a retrieval of the assignment approval conditions as shown in Fig. 8, specified by the copyright owner (or contents provider) of the corresponding ticket (ID). If the assignment approval conditions are found, the assignment dealing unit 52 generates conditions to be levied to the assignment destination from the contents of the assignment approval conditions as shown in Fig. 8 and the contents of the notification of the assignment destination as shown in Fig. 5, and notifies these conditions as assignment destination assignment conditions to the assignment data terminal 2. As shown in Fig. 9, as the assignment approval conditions, fee, method of payment, payment destination data, etc. are described, the sum of the assignment source payment part and the payment part of the copyright owner or the contents provider are shown. When the portable data terminal 2 receives the assignment destination assignment conditions, it executes a process corresponding to these conditions. If fee has been charged, the portable data terminal 2 executes a process of paying the fee in the specified method of payment. At this time, the fee is paid to the manager of the assignment monitoring server 5. For the fee payment, it is possible to adopt a settlement method from the portable data terminal via network.

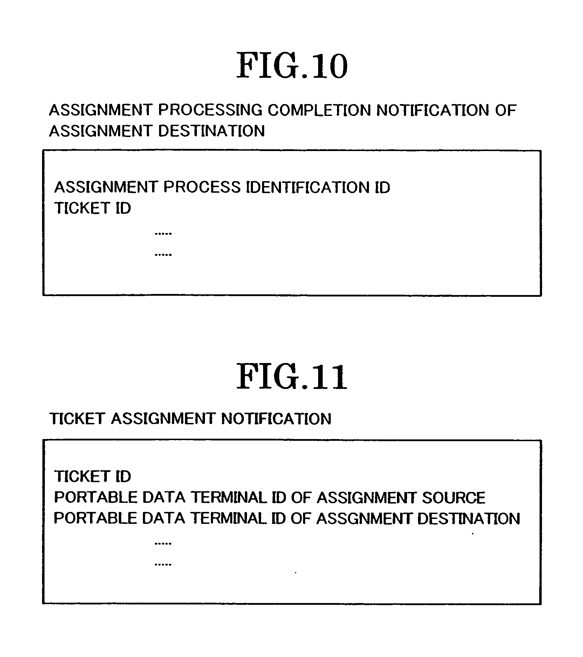

Step A-8: When the assignment data terminal 2 has completed, the process following the assignment conditions in the step S-7, it notifies the end of the process to the assignment monitoring server 5. The notification contains at least the contents of assignment identification ID and ticket ID as shown in Fig. 10. In the assignment monitoring server 5, the assignment approval condition processing unit 53 confirms that the portable data terminal 2 has paid the fee, and then follows the assignment approval conditions of the copyright owner or the contents provider as shown in Fig. 8 and also the conditions specified by the assignment source as shown in Fig. 6. If fee payments are requested individually, the assignment approval condition processing unit 53 does the payments. Afterwards, the assignment approval condition processing unit 53 notifies to the assignment dealing unit 52 that the assignment conditions have all been cleared. The assignment dealing unit 52 holds the notification.

Step A-9: In the portable data terminal 2, the ticket managing unit 13 notifies the completion of the necessary processes of the assignment destination via the communication part 14 to the portable data terminal 1.

Step A-10: In the portable data terminal 1, when the ticket managing unit 13 receives the notification in the step A-9, it makes an inquiry to the assignment monitoring server 5 for confirming that the process concerning the assignment to the portable data terminal has been normally completed. In the assignment monitoring server 5, the assignment dealing unit 52 checks whether a notification that the assignment conditions have been cleared has been received in the step A-8.

Step A-11: After completion of the process in the step A-10, the assignment monitoring server 5 notifies to the ticket server 4 that the ticket has been assigned. The address of the notification destination is the ticket server address specified in the assignment source notification as shown in Fig. 6.

The process in this step becomes effective when the ticket server 4 has a ticket re-issuing function. That is, the process is executed in order to prohibit acceptance of a re-issuance request from a portable data terminal, which must not have any right after committing assignment. If the ticket server 4 holds, in this process, data of the portable data terminal with the ticket issued thereto, the assignment monitoring server 5 requests the re-writing of the data. The contents notified from the assignment monitoring server 5 to the ticket server 4 contains at least the contents as shown in Fig. 11. Specifically, ticket ID, assignment source portable data terminal ID as identifier for absolutely identifying the assignment source portable data terminal and assignment destination portable data terminal ID as identifier for absolutely identifying the assignment source portable data terminal, are notified.

Step A-12: The assignment monitoring server 5 notifies to the portable data terminal 1 that the assignment has normally been committed. Afterwards, the ticket managing unit 13 of the portable data terminal 1 decides that the assignment has been completed, and perfectly deletes the pertinent ticket in the storage unit 16. After the process has been normally completed, the assignment dealing unit 52 of the assignment monitoring server 5 deletes the provisionally held data concerning the assignment between the portable data terminals 1 and 2.

Step A-13: The ticket managing unit 13 in the portable data terminal 1 notifies to the portable data terminal 2 that all the processes have been ended. When the ticket managing unit 13 of the portable data terminal 2 receives the notification, it re-writes the portable data terminal ID in the ticket, which has been obtained in the assignment process sequence, to an identifier for absolutely identifying the portable data terminal 2.

This process permits execution of the contents corresponding to the ticket.

Step A-14: The portable data terminal 2 executes the contents with the obtained ticket. This process is the same as in the step A-2.

When the assignment monitoring server 5 receives fee paid from the assignment destination terminal 2, the copyright fee of the registered contents or the contents provider are to be paid. However, when it is necessary to pay the fee to the assignment destination terminal 1 as well, the copyright owner or the contents provider may part of the fee collectively levied from the assignment destination portable data terminal 2 corresponding to the payment to the assignment destination portable data terminal 1. Thus, the assignment destination portable data terminal 2 can make collective fee payment via the assignment monitoring server 5, and it is thus possible to reduce the data communication quantity and also reduce the labor of the assignment destination portable data terminal user.

In the first embodiment as described, when the portable data terminal assigns a ticket of such contents as music data and image data stored therein to a different portable data terminal, an assignment approval can be automatically obtained from the copyright owner of the contents. That is, the copyright is protected. This is so because the assignment monitoring server undertakes the dealing of the assignment as a third party. Also, this is so because the contents copyright owner or the contents provider can preset in the assignment monitoring server assignment approval conditions for each content, which include the fee payment method and have to be cleared (pay the fee) for committing the assignment.

Furthermore, when a portable data terminal assigns tickets of such contents as music data and image data stored therein, it can assign the tickets one after another. This is so because the assignment is made possible not in memory medium but in a wireless or wired system.

Further, copyright fee collection is possible at the time of used contents sales. This is so because like the first advantage the assignment monitoring server is requested to undertake the assignment dealer as a third party. Also, this is so because the contents copyright owner or the contents provider can preset in the assignment monitoring server assignment approval conditions for each content, which include the fee payment method and have to be cleared (pay the fee) for committing the assignment.

As a different embodiment of the present invention, a second embodiment will be described, in which contents and tickets are both assigned.

The system arrangement of the embodiment is the same as in the arrangement shown in Fig. 1.

The second embodiment is different from the first embodiment in that, while in the first embodiment only tickets are assigned, in this embodiment at the time of the ticket assignment it is possible to assign the contents together with the ticket assignment to other portable data terminals.

As for the operation, only what is different from the first embodiment in the step processes in the sequence diagram shown in Fig. 4.

In the step A-6, the following is different from the first embodiment.

While in the first embodiment only tickets are sent out, in this embodiment contents corresponding to the tickets, respectively, are sent out together to other portable data terminals.

Also, in this embodiment the process of obtaining contents from the contents server 3 in the step A-14 is unnecessary.

In the second embodiment, it is possible to execute contents without access to the contents server 3. This means that in an environment that the use of the communication channel between the portable data terminal 2 and the contents server 3 is charged for in dependence on the communication data quantity or the communication time, an advantage of making the communication expenses unnecessary can be expected.

A third embodiment is an example in which the assignment is for the presentation purpose, i.e., the contents utilization right is assigned from the assignment source user to the assignment destination user for the presentation purpose.

The system arrangement of the third embodiment is the same as the first embodiment shown in Fig. 1.

The third embodiment is different from the first embodiment in that, while in the first embodiment the portable data terminal 1 assigns a content after utilization to the portable data terminal 2, in this embodiment the portable data terminal 1 assigns a ticket without utilization at all to the portable data terminal 2. In other words, this embodiment is an example for the case, the portable data terminal 1 purchases a ticket for the presentation purpose from the outset at the time of the ticket purpose.

As for the operation, what is different from the first embodiment will be described in the step processes shown in the sequence diagram of Fig. 4 will be described hereinafter.

In this embodiment, the process of obtaining contents in the step A-2 is unnecessary, and the ticket contents utilization flag is held at a value indicative of non-use. In the step A-5, a value indicative of non-use and no assignment source condition is notified in this state to the assignment monitoring server. In the process in the step A-6, the non-use ticket is sent out to the portable data terminal 2.

In the step A-7, what is different from the first embodiment is as follows. The assignment approval condition managing unit 51 refers to no assignment approval condition, and does notification to the portable data terminal 2 without any approval condition.

In the step A-8, what is different from the first embodiment is as follows. In the process in the assignment monitoring server 5, the assignment approval condition processing unit 53 is not called, and it is held in the assignment dealing unit 52 that the assignment conditions have been cleared.

A fourth embodiment is an example of the case that the number of times of utilization is specified in the conditions for utilizing an assigned ticket.

The system arrangement of the fourth embodiment is the same as the first embodiment shown in Fig. 1.

The fourth embodiment is different from the first embodiment in that, while the first embodiment concerns perfect assignment of tickets, in this embodiment the ticket utilization conditions can be assigned.

As for the operation, what is different from the first embodiment in the step processes in the sequence diagram of Fig. 4 will be described hereinunder.

What is different from the first embodiment in the pre-processing in the fourth embodiment is as follows. The contents copyright owner or the contents provider has to register assignment approval condition with respect to the number of times of utilization as contents to be registered in the assignment monitoring server 5. In addition, it is necessary to describe conditions for one time of utilization among the assignment approval conditions as shown in Fig. 8, which are managed in the assignment approval condition managing unit 51 in the assignment monitoring server 5.

In this embodiment, in the process of the step A-5, what is different from the first embodiment is as follows. The portable data terminal 1 describes an assignment range (i.e., this time the times assignment utilization) in the Fig. 6 assignment source notification to the portable data terminal 1.

In this embodiment, in the process of the step A-6, what is different form the first embodiment is as follows. The portable data terminal 1 prohibits the use in itself of an assignment subject ticket stored in the storage unit 16 by the ticket managing unit 13 by re-writing the portable data terminal ID as the description contents of the ticket to a value indicative of ineffectiveness. Subsequently, the ticket is duplicated, and the duplication source ticket is re-written to a value of the difference of the number of times of assignment from the number of times that the ticket can be presently used. Then, the duplicated ticket, i.e., the ticket to be sent out to the portable data terminal 2, is written in the number of times of utilization corresponding to the number of times of assignment.

In the process of the step A-12, what is different from the first embodiment is that the pertinent ticket in the storage unit 16 of the portable data terminal 1 is not perfectly deleted, but the portable data terminal ID in the ticket is written in an identifier for absolutely discriminating the assignment data terminal 1.

While the fourth embodiment has been described with respect to the number of times of utilization, it is also applicable to the utilization time. In the fourth embodiment, not only perfect ticket assignment but also partial assignment of utilization conditions is possible.

Also, while the first to fourth embodiments have been described in connection with the case of assigning ticket for contents utilization between portable data terminals, these embodiments are of course applicable as well to the ticket assignment between terminals connected to the network and also to the case of contents utilization in personal computer or like terminal device connected to the internet. Further, while music data and image data have been described as examples of contents, the present invention is also applicable to the case of utilizing software such as game software.

Furthermore, while the above embodiments have been described in connection with an example, in which the portable data terminals 1 and 2, the contents server 3 as the service provision side, the ticket server 4, and the assignment monitoring server 5 are provided on the side of user utilizing contents, in these embodiments of the present invention by installing programs in universal computer systems connected to the network, these computer systems can be made to function as contents servers, ticket servers and assignment monitoring servers. Further, by installing programs in the portable data terminal on the user side, the terminal can be made to realize a function of obtaining contents utilization right from a ticket server for issuing ticket data separately from the contents, a function of permitting exchange of ticket data with other terminal, a function of confirming the contents utilization right based on ticket data of the assignment subject by making notification to the assignment monitoring server for managing the assignment of the ticket, and a function of obtaining and executing the contents shown by the ticket data.

These programs can be provided via the communication line and also provided as recording medium with the programs recorded therein. This arrangement permits constructing a system for utilizing contents as described before in connection with the embodiments of the present invention.

As has been described in the foregoing, according to the present invention, when assigning a ticket showing the right of utilizing contents such as music data and image data held by the user's terminal to any other terminal, it is possible to automatically obtain the approval of the assignment by the copyright owner of the contents or the like, and also it is possible to permit utilization of contents in the form of ticket assignment separate from the contents themselves. In other words, it is possible to permit utilization of contents on the network in the state that the copyright is protected. According to the present invention, the contents copyright owner or the contents provider can set assignment approval conditions including the fee payment method and the like for each content in the assignment monitoring server, and assignment can not be committed unless all these conditions are cleared (fees are paid). Thus, copyright protection is provided in the network.

Also, when assigning tickets of such contents as music data and image data held in the user's terminal to any other terminal, the tickets can be assigned one after another, it is not necessary to obtain any approval in the form of combination with contents, the contents can be utilized by doing ticket exchange in the form separate from contents on the network, and it is possible to solve problems in the copyright approval. Assignment of tickets in wireless or wired system is possible between users, and it is possible to utilize contents via the network and obtain copyright owner's approvals via the network.

Furthermore, copyright fee collection is possible at the time of used contents sales. The contents copyright owner or the contents provider can set assignment approval conditions including fee payment method and the like in the assignment monitoring server, it is necessary to clear the conditions (i.e., pay fees) for committing the assignment. It is thus possible to collect the copyright fee when doing used contents sales.

Further, since the contents assignment approval conditions are provided as ticket data separate from the contents, it is possible to assign the contents themselves together with the ticket between user's terminals via the communication network.

Further, the sole contents utilization right can be assigned as a present, the act of assignment can be done as a process like the act of assigning concert or movie tickets, and further promote the utilization of contents via the network.

Further, it is possible to prescribe such utilization contents as number of times of content utilization and utilization time via the network in the ticket and follow the will of the contents copyright owner or the contents provider. Further, since the user's convenience is improved, it is possible to improve the convenience of contents utilization on the network and promote the contents utilization.

According to an embodiment, a ticket showing contents utilization right is issued separately form contents to permit exchange of the ticket between terminals. In order that an approval by the contents copyright under be obtained for the ticket exchange between terminals, a check is made by making a notification to an assignment monitoring server on the network. If necessary, the assignment monitoring server may be allowed to levy fees. Thus, direct exchanging of contents utilization right between terminals and automatic copyright owner's approval are realized.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. A contents utilization system comprising a contents server with contents stored therein, a terminal for obtaining contents stored in the contents server via the network and executing the obtained contents, a ticket server for issuing ticket data showing a utilization right executing the contents in the terminal,
the terminal including a means for assigning the ticket data to a different terminal,
the contents utilization system further comprising an assignment monitoring server for receiving a notification from a terminal for assigning the ticket data and checking whether the assignment of the ticket data between the terminals meets the contents utilization conditions.

2. The contents utilization system according to claim 1, wherein the ticket data contains contents identification data, terminal identification data, contents utilization conditions, ticket server address, contents server address, a key for deciphering contents data, assignment monitoring server address, data indicative of whether assignment of ticket data is possible, and data indicative of whether the contents represented by the contents data have been utilized.

3. The contents utilization system according to claim 1 or 2, wherein when conditions for levying fee for ticket assignment are provided as ticket assignment approval conditions, the assignment monitoring server approves the assignment with a condition that fee is levied from the assignment destination terminal user according to the assignment approval conditions.

4. The contents utilization system according to claim 3, wherein the assignment monitoring server can update the ticket assignment approval conditions.

5. The contents utilization system according to claim 3, wherein the assignment monitoring server includes means for making payment to the assignment source terminal user when it has levied fees from the assignment destination terminal user.

6. The contents utilization system according to claim 2, wherein when data of whether the contents of the ticket data have been utilized is not utilized in the assignment destination source, the assignment monitoring server approves the assignment of the ticket data without levying any fee.

7. The contents utilization system according to claims 1 to 6, wherein the contents server, the ticket server and the assignment monitoring server are together constituted by a single server.

8. A contents utilization method comprising the steps that:
data of a contents utilization right, which permits obtaining and executing contents, is issued as ticket data to a terminal desiring contents utilization separately from contents distributed to the terminal;
when assigning the contents utilization right to a different terminal, the ticket data is assigned to the other terminal, while notifying the ticket assignment to an assignment monitoring server for managing the assignment of the contents utilization right;
the assignment monitoring server notifies contents utilization approval conditions shown by the ticket data to the assignment destination terminal;
when the ticket data assignment destination terminal executes a process meeting the notified assignment approval conditions, it notifies the completion of the ticket data assignment process; and
the assignment destination terminal obtains and executes the contents according to the obtained ticket data.

9. The contents utilization method according to claim 8, wherein the ticket data contains contents identification data, terminal identification data, contents utilization condition data, ticket issuance server address, contents storage server address, a key for de-ciphering contents data, assignment monitoring server address and data as to whether the ticket contents have been utilized.

10. The contents utilization method according to claim 9, wherein when conditions for levying fee for ticket assignment are provided as ticket assignment approval conditions, the ticket assignment destination terminal user executes a fee payment process according to the assignment approval conditions and then notifies the completion of the ticket assignment process.

11. The contents utilization method according to claim 10, wherein after the ticket assignment destination terminal user has made fee payment to the assignment monitoring server, the assignment monitoring server makes fee payment of an amount corresponding to the fee charged to the assignment destination terminal user.

12. The contents utilization method according to one of claims 9 to 11, wherein the data as to whether the contents in the ticket have been utilized shows that the contents are not utilized in the assignment source terminal, the assignment destination terminal user obtains the ticket without payment of any fee.

13. A ticket server for issuing contents ID, contents ID, content utilization terminal ID, contents utilization condition, and ticket data concerning whether the sole ticket data have been assigned between the terminals, as the contents utilization right data to a terminal desiring the contents utilization or contents utilization right assignment separately from a contents server with the contents stored therein.

14. An assignment monitoring server for registering contents utilization approval conditions of a contents copyright owner or a contents provider, receiving a notification from an assignment source or an assignment destination terminal desiring assignment of a content utilization right, checking whether the contents utilization right assignment meets the approval conditions for the contents copyright owner or the contents provider and notifying the check result to the assignment source and destination terminals.

15. The assignment monitoring server 14, wherein the registered contents utilization approval conditions are capable of being updated by the contents copyright owner or the contents provider.

16. The assignment monitoring server according to one of claims 14 and 15, wherein in the case of requiring fee payment to the assignment source terminal user in the case when fee about the ticket assignment is levied from the assignment destination terminal user, the assignment destination terminal user pays fee.

17. A terminal comprising means for obtaining ticket data of contents utilization right from a ticket server, which issues the ticket data separately from the contents, ticket communication means for permitting exchange of the ticket data with a different terminal, means for confirming the contents utilization right by making a notification of the right to an assignment monitoring server for managing the ticket assignment, and a contents execution means for obtaining and executing the contents of the ticket data.

18. A program to be installed in a universal data processing system having:
a function of a contents server with contents stored therein;
a function of a ticket server for issuing ticket data of a utilization right for executing the contents to a terminal; and
a function of receiving, at the time of assignment of the ticket data between terminals, a notification from a terminal, which assigns the ticket data, and checking whether the assignment of the ticket data between the terminals meets the contents utilization conditions provided in the ticket data.

19. The program according to claim 18, wherein the ticket data contains contents identification data, terminal identification data, contents utilization conditions, ticket server address, contents server address, a key for de-ciphering contents data, assignment monitoring server address, data indicative of whether assignment of ticket data is possible, and data indicative of whether the contents represented by the contents data have been utilized.

20. The program according to claim 19, wherein when conditions for levying fee for ticket assignment are provided as ticket assignment approval conditions, the assignment monitoring server approves the assignment with a condition that fee is levied from the assignment destination terminal user according to the assignment approval conditions.

21. The program according to claim 20, wherein the assignment monitoring server can update the ticket assignment approval conditions.

22. The program according to claim 20 or 21, wherein the assignment monitoring server includes means for making payment to the assignment source terminal user when it has levied fees from the assignment destination terminal user.

23. The program according to one of claims 19 to 22, wherein when data of whether the contents of the ticket data have been utilized is not utilized in the assignment destination source, the assignment monitoring server approves the assignment of the ticket data without levying any fee.

24. A program to be installed in a terminal having a communication means for executing:
a function of obtaining ticket data of the contents utilization right from a ticket server, which issues the ticket data separately from the contents, a function of permitting exchange of the ticket data between terminals, a function of confirming a contents utilization right of the ticket data as a subject of assignment by making a notification to an assignment monitoring server for managing the ticket assignment.
